# EUROPEAN PATENT SPECIFICATION

(11) **EP 3 485 242 B1**
(45) Date of publication and mention of the grant of the patent: **29.05.2024**
(21) Application number: 17736964.2
(22) Date of filing: 11.07.2017
(51) Int. Cl.: H02P 29/02, G01H 1/00, H02P 29/40

(54) **APPARATUS AND METHOD FOR THE MANAGEMENT OF AN INDUSTRIAL PLANT COMPRISING ELECTRICAL MACHINES INTERACTING WITH ENERGY CONVERTERS**
VORRICHTUNG UND VERFAHREN ZUR VERWALTUNG EINER INDUSTRIEANLAGE MIT ELEKTRISCHEN MASCHINEN, DIE MIT ENERGIEWANDLERN INTERAGIEREN
APPAREIL ET PROCÉDÉ DE GESTION D'UNE INSTALLATION INDUSTRIELLE COMPRENANT DES MACHINES ÉLECTRIQUES ENTRANT EN INTERACTION AVEC DES CONVERTISSEURS D'ÉNERGIE

(30) Priority: 13.07.2016 IT 201600073261
(43) Date of publication of application: 22.05.2019
(73) Proprietor: Nuovo Pignone Technologie - S.r.l., 50127 Florence (IT)
(72) Inventor: SIHLER, Christof, 12277 Berlin Baden-Wuerttemberg (DE); ROTONDO, Paola, 50127 Florence (IT); TENCA, Pierluigi, Niskayuna New York 12309 (US); DEL CORONA, Iacopo, 50127 Florence (IT); SGRO', Daniele, 50127 Florence (IT); MEUCCI, Francesco, 50127 Florence (IT); LENCI, Stefano, 50127 Florence (IT)
(74) Representative: Novagraaf Group
(86) International application number: PCT/EP2017/067444
(87) International publication number: WO 2018/011224

(56) References cited:
- CN-U- 201 621 227
- JP-A- 2010 283 905
- US-A- 3 327 145
- US-A- 5 845 230
- US-A1- 2006 244 425
- US-A1- 2007 279 012
- US-A1- 2008 079 598
- US-A1- 2010 072 751
- US-A1- 2010 141 193
- US-A1- 2013 049 660
- US-A1- 2014 025 248
- US-A1- 2014 081 593
- US-B1- 6 298 308
- US-B1- 8 886 473
- A M Miri ET AL: "ACTIVE DAMPING OF TORSIONAL MODES IN TURBINE-GENERATOR SHAFTS", Proceedings Second International Symposium on High Voltage and High Power Tests, Measurements and Certification of Electric Power Equipment SIMC-EE, 19 October 2004 (2004-10-19), XP055349042, Retrieved from the Internet: URL:https://www.ieh.kit.edu/rd_download/Ac tiveDamping_TorsionalModes.pdf [retrieved on 2017-02-23]
- Christof Sihler ET AL: "Torsional mode damping for electrically driven gas compression trains in extended variable speed operation", Proceedings of the 38th Turbomachinery Symposium, 1 January 2009 (2009-01-01), pages 81-92, XP055349045, Retrieved from the Internet: URL:http://turbolab.tamu.edu/proc/turbopro c/T38/ch08_Sihler.pdf [retrieved on 2017-02-23]

## Description

### BACKGROUND

The present invention relates to an apparatus and method for identifying, controlling and modelling an oil and gas plant, a petrochemical plant or the like, in particular comprising electric machines, electrical motors or electrical generators and associated drive trains adapted to transmit power, movement and torque.

US 2010/141193 A1 discloses a torsional-mode damping system in which electric power supplied to an electric motor is controlled to dampen torsional vibrations at a natural frequency of a compression train. US3327145A discloses damping pulsation in an electromagnetic apparatus. A M Miri ET AL: `ACTIVE DAMPING OF TORSIONAL MODES IN TURBINE-GENERATOR SHAFTS', Proceedings Second International Symposium on High Voltage and High Power Tests, Measurement and Certification of Electric Power Equipment SIMC-EE, 19 October 2004 discloses damping in shafts. US 2014/081593A1 discloses monitoring of a rotating device. Christof Sihler ET AL: "Torsional mode damping for electrically driven gas compression trains in extended variable speed operation", Proceedings of the 38th Turbomachinery Symposium, 1 January 2009 (2009-01-01), pages 81-92 discloses applying a damping control system. US 8 886 473 B1 discloses a system for vibration analysis. US 2010/072751 A1 discloses modification of parameters of a controller of a machine. US 2006/244425 A1 discloses an active torsional vibration damping system wherein its activation is based on a detection by a sensor of a torsional mechanical load being greater than a predetermined threshold.

In plants of this kind, comprising moving parts of large mass connected to steel shafts of large inertia characterised by low natural damping, multiple types of vibration phenomena are likely to occur, especially torsional and lateral vibrations in rotating shafts and/or in machine foundations and basements.

Events that trigger said vibration phenomena can be of several types. They can be of the mechanical type, for example sudden mechanical load change, or they can be of electrical type, for example inter-harmonics or the insertion or the disconnection of large electrical loads to or from the plant electrical generators, or electromagnetic transient phenomena that occur in the plant electrical network. Such perturbations are characterised by a broad excitation spectrum and therefore can trigger the resonance frequency of the system causing dangerous oscillations and vibrations within said system. This is particularly true for islanded plants. In fact, considering as an example a power generation plant, when a power system is islanded, it has no connection - or just a very weak one - to a utility network and therefore the loads are typically large relative to said network so that their switching on and off can potentially affect the network itself. When the ratings of electrical motors and drives in these systems increase, the related mechanical and electrical dynamics are increasingly mutually coupled, thus making it difficult to avoid vibrations and oscillations in motor or generator drive trains by conventional countermeasure techniques.

The torsional vibration phenomena are, in particular, very dangerous in that they can severely damage the transmission shafts, resulting in very expensive repair and maintenance operations to be performed on the plant. Methods for suppressing torsional vibrations are known in the art. One method for suppressing torsional vibrations in synchronous generators is described in C. Sihler, "Suppression of torsional vibrations in rotor shaft systems by a thyristor controlled device" 35th Annual IEEE Power Electronics Specialist Conference, pages 1424-1430 (2004). The method includes applying a torque in counter phase to a measured torsional velocity by means of an additional thyristor converter circuit comprising a DC inductor. This method is most applicable to embodiments wherein the installation of a separate line commutated converter system and a separate energy storage (inductor or capacitor) is technically and economically feasible.

Another method for suppressing torsional vibrations is described in U.S. patent No. US7173399. The method includes sensing a signal representative of torque on a shaft coupled to the inverter or the rectifier of a converter system comprising a DC link, using the sensed signal for detecting a presence of a torsional vibration on the shaft corresponding to a natural frequency of the shaft, and damping the torsional vibration by modulating active power through the respective inverter or rectifier. Another method for damping torsional vibrations is described in German, patent No. DE10359259. The method uses an electrical machine for providing a damping torque for the drive train at a given damping frequency, in counter-phase to the angular velocity of the torsional oscillation.

### BRIEF DESCRIPTION OF THE INVENTION

The present invention is defined in the accompanying claims and concerns a system and a method for the management of a plant wherein the term management is intended to indicate the operation of identifying, controlling and modelling of an industrial plant.

The system and method according to the present invention is directed to industrial plants in general, with particular focus on oil and gas plant, petrochemical plants or the like, said apparatus and method being adapted to improve the plant availability by avoiding expensive plant trips and shaft damages caused by torsional vibrations and oscillations, which are generally difficult to detect, especially in islanded plants or in plants fed by weak electric grids. Furthermore, the system and method according to the present invention improve the operability and optimization of the overall plant, also supporting remote diagnostic. The system and method for the management of a plant according to the present invention is adapted to be applied to existing or new electrified plants - especially islanded ones - the transmission trains of which are particularly at risk of torsional vibrations and oscillations and/or particularly in need of improved availability, better identification and enhanced remote diagnostic.

This is achieved by a system as defined in claim 1 and by a method as defined in claim 13. Among the other features, the subject-matter of the present invention includes interfacing with at least one among the sensors employed within the plant - either adapted to sense electrical or mechanical quantities - which is capable of detecting torsional oscillations when positioned in suitable locations of train shafts. Said at least one sensor is not necessarily a torque sensors, but, in general, any sensor that has the capability of detecting physical symptoms of torsional vibrations. The present invention, through a set of on-line identification procedures, models and control algorithms, leveraging on the data acquired by the sensors, as well as the information from the component manufacturers and the plant owner, is adapted to both properly control active torsional damper solutions connected to the plant to mitigate torsional vibrations, and to improve the overall operation of the plant, applying feedback control algorithms to reduce the amplitude of torsional vibrations within the plant to acceptable and safe values.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
Figure 1 shows a block diagram of an overview of the present invention;
Figure 2 shows a block diagram of an example of operation of the present invention wherein the supervisory control of the plant is sufficient to act on the control processes of the existing components of the system, by slightly adapting their reference values, in order to damp the detected torsional vibration, and
Figure 3 shows a block diagram of an example of operation of the present invention wherein a separate torsional mode damper control is needed together to the supervisory control system in order to avoid that the torsional mode damper (TMD) controller needs to modulate excessive damping power.
Figure 4 shows a block diagram of a preferred embodiment of the plant control unit according to the present invention.

### DETAILED DESCRIPTION OF THE INVENTION

The following description of exemplary embodiments refer to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

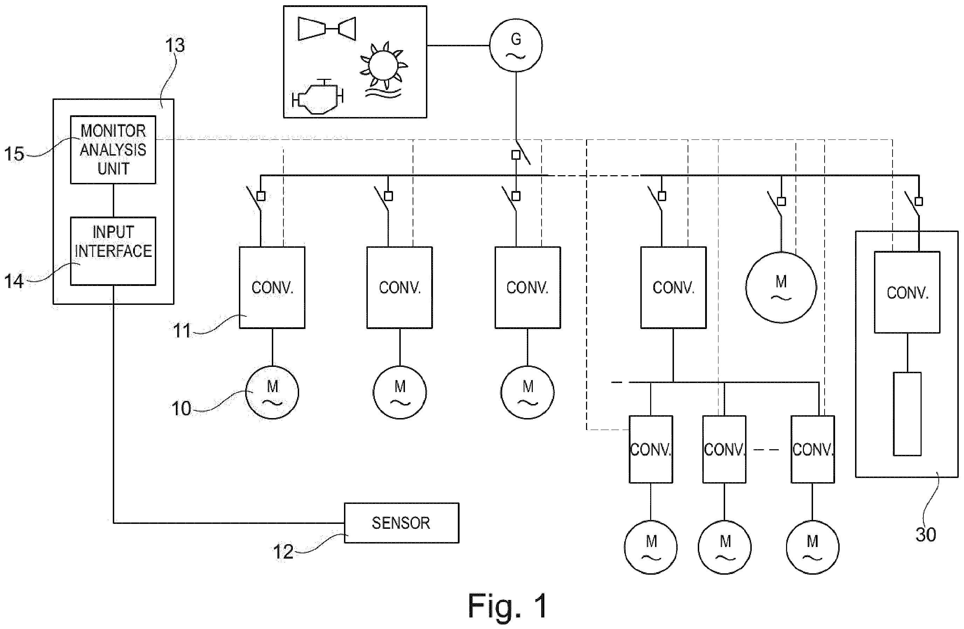

With reference to the enclosed Fig. 1 and according to an exemplary embodiment, the present invention refers to an apparatus for the management of a plant such as an oil and gas plant, a petrochemical plant, a thermal power plant and the like, comprising:
.at least one electrical machine 10 (as a non-limiting example an electrical motor or an electrical generator), electrically connected to
.at least one energy converter 11 (as a non-limiting example a Variable Frequency Drive - VFD) associated to and adapted to drive said at least one electrical machine;
.at least one rotating shaft associated to said at least one electrical machine;
.at least one sensor 12 configured for sensing a signal representative of a time-varying torque of said shaft (as a non-limiting example, said signal can be derived from torque sensors or torsion angle sensors or speed sensors or any other types of sensors adapted to sense, directly or indirectly, the torque of said shaft);
.a plant control unit 13 comprising in turn:
   .an input interface 14 adapted to receive data from at least one sensor, said input interface being associated to
   .a monitoring and analysis unit 15 associated to said input interface and to said at least one energy converter, said monitoring and analysis unit 15 being adapted to detect the presence of a torsional vibration or oscillation requiring a control action and to modify the reference values of the control loops of said at least one energy converter, based on the detection of the presence of a torsional vibration or oscillation.

Said monitoring and analysis unit 15 provides a feedback control directed to at least one electric machine within the plant, said feedback control being based on the monitoring of the trend of relevant torsional vibrations, performed by said monitoring and analysis unit 15, through the analysis of the output of at least one sensor associated to any section or machine or shaft of the plant and adapted to give indications on said trend of relevant torsional vibrations within the plant.

The time-varying torque of the shaft to be detected by said at least one sensor can be related to at least one natural torsional frequency of said shaft, said natural torsional frequency being, in particular, lower than 400 Hz or in the sub-synchronous frequency range (< 50 Hz).

In one embodiment of the present invention, said shaft is coupled to an electrical machine acting as generator.

The feedback provided by the monitoring and analysis unit 15 may comprise a small static deviation Δ_n from the default reference value n0 in the control loop of at least one electric machine of the plant and/or a small dynamic power deviation Δ_p from the default reference value p0 in the control loop of the static frequency converter. Said small static deviation Δ_n may be a small percentage, e.g. 0.5%, of said default reference value n0, depending, in general, on the measured trend of the detected torsional vibrations.

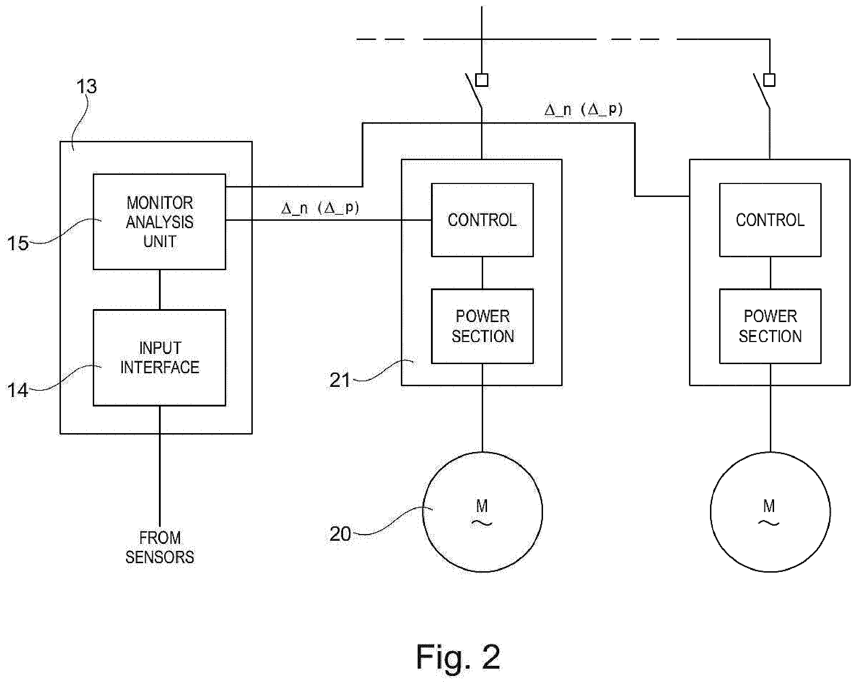

With reference to the enclosed Fig. 2, showing an example of operation of the present invention, the monitoring and analysis unit 15 interacts with the control processes of the existing components of the plant - e.g. an energy converter 21 associated to at least one electric machine 20 of the plant - by slightly adapting their reference values. As an example, the monitoring and analysis unit 15 may be adapted to interact with the control loop of at least one of the electrical motors of the plant in order to adjust the regulation of the rotor speed. In case of detection of small torsional vibration phenomena within the plant, the small adjustment of the speed of at least an electrical motor of the plant can be effective in damping said small torsional vibration phenomena and reducing the amplitude of said torsional vibrations to acceptable and safe values.

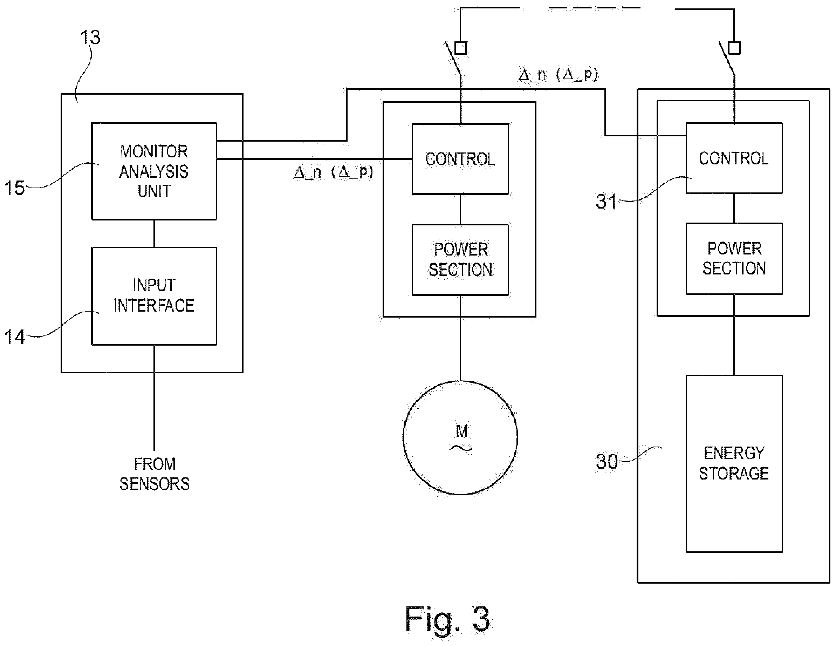

In the embodiments of the present invention, referred to in enclosed Fig. 3, a torsional mode damper (TMD) 30 is present and said monitoring and analysis unit 15 is further associated to the controller 31 of said torsional mode damping (TMD) 30 and is further adapted to provide feedback control, to said TMD controller 31, for damping vibration phenomena reaching critical amplitudes and / or triggering resonances. Said torsional mode damping (TMD) controller 31 can also be integrated within said monitoring and analysis unit 15. Furthermore, the TMD 30 can be a separate device or integrated within at least one energy converter in the plant, normally referred to as Integrated TMD (ITMD). The example of operation of the present invention, depicted in enclosed Fig. 3, wherein an additional TMD 30 controller operates together to the monitoring and analysis unit 15 in order to reduce vibration phenomena characterised by amplitudes that cannot be controlled by said monitoring and analysis unit alone. In this case the operation of the monitoring and analysis unit is still useful, in order to avoid that the TMD controller need to modulate excessive damping power to correct the vibration phenomena like in the case of large systems and plants. The monitoring and analysis unit 15 according to the present invention advantageously allows TMD operations e.g. in large and complex oil and gas plants where TMD alone operations would not be practical.

According to the embodiments of the present invention, referred to in enclosed Fig. 3, the torsional vibration phenomena detected by said monitoring and analysis unit are distinguished between simple torsional interaction phenomena and torsional resonance phenomena. The simple torsional interaction phenomena can be damped by small (not larger than 5%) changes of VFD reference values, e.g. a change Δ_n equal to the 0.5% of the higher operative speed n and/or a change Δ_p of the operating power of an energy converter or VFD driven electrical machine which is enough to change the inter-harmonic frequency spectrum of the detected phenomena.

The present invention is therefore adapted to detect and distinguish torsional interactions and vibrations, requiring only small reference value adaptions, and larger torsional (electro-mechanical) resonance phenomena that require TMD action, and to automatically apply the right control method according to the performed detection.

In more general terms, the monitoring and analysis unit according to the present invention is associated to at least one actuator controller and adapted to provide feedback control to said actuator controller, said actuators being energy storage means capable of storing energy received from within the plant system and returning at least a part of said energy to the plant system when requested. TMDs are one possible example of such actuators.

Further examples of TMDs that can be employed according to the present invention are preferably of the active type and they are adapted to store and release energy in electromagnetic form via a plurality of single or coupled inductors or capacitors; in kinetic and/or potential and/or gravitational form via a plurality of single or coupled moving bodies, possibly including fluids; in potential elastic form via a multiplicity of single or coupled elastic bodies or via a plurality of fluids; in heat form via a plurality of heat accumulating sub-systems; in chemical form via multiplicity of chemical reactions.

The monitoring and analysis unit 45 according to the present invention can be implemented in hardware and software and is adapted to process signals provided by said input interface 40, in order to provide new reference values for the control loops of said at least one energy converter, based on the detection of the presence of a torsional vibration or oscillation within the system.

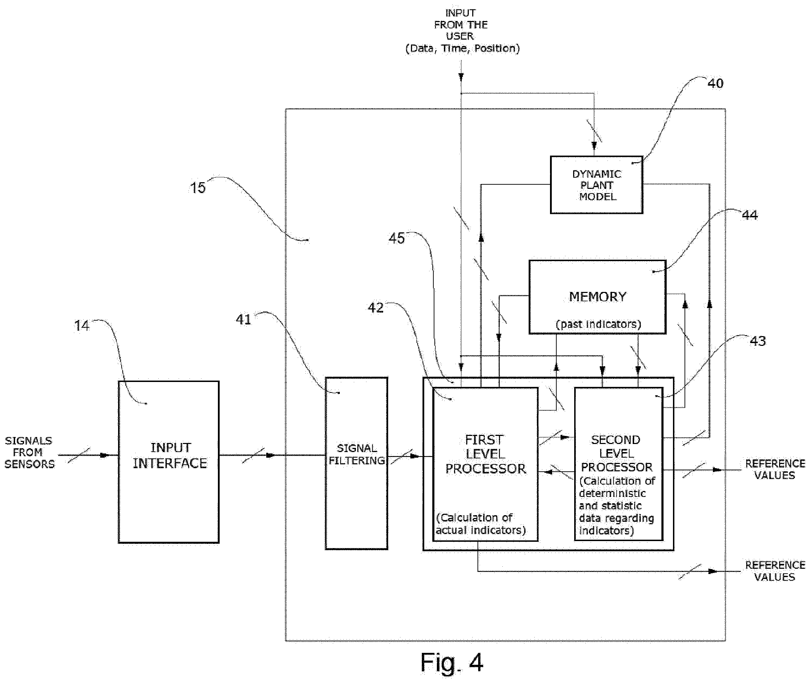

In a preferred but not limiting embodiment referred to in enclosed figure 4, said monitoring and analysis unit 15 is adapted to read signals provided by said input interface 14 and reference signals provided by a user and comprises:
.a signal filtering unit 41 adapted to receive signals from said input interface 14 and perform a first signal processing - of analog and / or digital type, depending on the input signals to process - adapted to filter out signals belonging to at least one predetermined frequency band.
.a processor 45 adapted to compute reference values for the control loops of said at least one energy converter, said reference values being functions of one or more of the following data: the actual measured signals obtained from the signal filtering unit 41; the past reference values previously stored in a memory 44; the input quantities and/or data defined and provided by the user; the current time and geographical position.
.a memory unit 44 adapted to store past reference values computed by said processor 42; the input quantities and/or data provided by the user.

Said processor 45 can be advantageously comprise, in turn:
- a first level processor 42 adapted to compute first indicators of plant operation, said first indicators being preferably multi-functional, multi-valued and time-varying and preferably comprising a plurality of algebraic and/or differential and/or integral and/or integral-differential relationships and/or look-up tables. Said first indicators are functions of one or more of the following entities: the actual measured signals obtained from the signal filtering unit 41; the past values of said first indicators previously stored in said memory 44; the input quantities and/or data defined and provided by the user; the current time and geographical position.
- a second level processor 43 adapted to compute and/or search for the maxima and/or minima of other functionals and/or optimal goal functions, which are hierarchically located at higher level than those characterizing the first processor 42, in order to compute second indicators of plant operation, said second indicators being preferably multi-functional, multi-valued and time-varying and preferably comprising a plurality of algebraic and/or differential and/or integral and/or integral-differential relationships and/or look-up tables and/or probabilistic distributions and/or stochastic processes and/or statistical operators. Said second indicators are functions of one or more of the following entities: the first indicators of plant operation obtained from said first level processor 42; the past values of said second indicators previously stored in said memory 44; the input quantities and/or data defined and provided by the user; the current time and geographical position.

Said functionals and/or optimal goal functions for the second level processor 43 may be multi-functional, multi-valued and time-varying algebraic and/or differential and/or integral and/or integral-differential relationships and/or look-up tables, as well.

In order to perform its computations the second level processors 43 uses a broader set of information collected from the plant and the first level processor 42 comprising, but not limited to: one or more present indicators computed by the first level processor 42; past information stored in the memory 44, possibly including past values of the aforementioned high level functionals and/or optimal goal functions; input quantities and/or data defined and provided by the user; the current time and geographical position.

The new reference values for the control loops of said at least one energy converter are then given by functions or combinations of said indicators from the first level processor 42 and/or said indicators from the second level processor 43. Said functions may comprise any mathematical operator over such indicators, including differentiation, integration, convolution and correlation, as well as they may comprise look-up tables possibly containing past values of said indicators.

Furthermore, the monitoring and analysis unit 15 according to the present invention can further comprise:
.a dynamic model 40 of the plant adapted to receive information and/or data from said processor 45 or from said first level processor 42 and/or said second level processor 43, and/or the input quantities and/or data provided by the user and furthermore adapted to emulate and/or model and/or predict and/or diagnose the behaviour of the plant. The model 40 of the dynamic plant is adapted to evolve in time to constantly improve its capability of modelling the real plant.

Finally, the monitoring and analysis unit 15 according to the present invention can further comprise a tele-communication unit adapted to receive / transmit data from / to a remote location in order to allow tele-management of the plant. Said tele-communication unit can be advantageously implemented according to the techniques available in the art.

## Claims

1. A system including an apparatus for the management of a plant and a plant comprising:
at least one electrical machine (10) electrically coupled to at least one energy converter (11) provided with a controller;
at least one rotating shaft associated to said at least one electrical machine;
at least one sensor (12) configured for sensing a signal representative of a time-varying torque of said shaft;
a plant control unit (13) comprising in turn:
an input interface (14) adapted to receive data from at least one sensor;
a monitoring and analysis unit (15), associated to said input interface and adapted to:
analyse said signal in order to detect the presence of a torsional vibration within said plant requiring a control action, and
modify the reference values of the controller of said at least one energy converter (11), in order to reduce said detected vibration;
**characterized in that**:
said plant further comprises a torsional mode damper (TMD) (30) configured to store and release energy provided with a torsional mode damping (TMD) controller (31); and **in that**
said monitoring and analysis unit (15) is further associated to the torsional mode damping (TMD) controller (31) and is further adapted to provide feedback control to the torsional mode damping (TMD) controller (31) in order to reduce said detected torsional vibration;
wherein said monitoring and analysis unit (15) is configured to:
discriminate the detected torsional vibrations between torsional interactions and torsional resonances;
modify the reference values of the controller of said at least one energy converter (11) without providing feedback control to the torsional mode damping controller (31) when torsional interactions are determined; and
provide feedback control to the torsional mode damping controller (31) as well as modifying the reference values of the controller of said at least one energy converter (11) when the torsional resonances are determined, to reduce the detected vibration.

2. The system according to claim 1, **characterized in that** said monitoring and analysis unit (15) is further adapted to detect torsional vibrations within said plant and properly modulating the modifying of the reference values of the controller of said at least one energy converter (11) and the modifying of the reference values of the torsional mode damping controller (31).

3. The system according to one or more of claims from 1 to 2, **characterized in that** said monitoring and analysis unit (15) is further adapted to detecting lateral vibrations within said plant and properly modulating the modifying of the reference values of the controller of said at least one energy converter (11) and the modifying of the reference values of the torsional mode damping controller (31).

4. The system according to one or more of the preceding claims, **characterized in that** said plant is an oil and gas plant or a petrochemical plant.

5. The system according to one or more of the preceding claims, **characterized in that** said torsional mode damper (30) is of the active type.

6. The system according to one or more of the preceding claims, **characterized in that** said torsional mode damper (TMD) (30) is adapted to store and release energy in electromagnetic form via a plurality of single or coupled inductors or capacitors; or in kinetic and/or potential and/or gravitational form via a plurality of single or coupled moving bodies, possibly including fluids; or in potential elastic form via a multiplicity of single or coupled elastic bodies or via a plurality of fluids; or in heat form via a plurality of heat accumulating sub-systems; or in chemical form via a plurality of chemical reactions.

7. The system according to one or more of the preceding claims, **characterized in that** said at least one time-varying torque of said shaft is related to at least one natural torsional frequency present within said plant.

8. The system according to one or more of the preceding claims, **characterized in that** the frequency of said torsional vibrations is lower than 400 Hz.

9. The system according to one or more of the preceding claims, **characterized in that** said monitoring and analysis unit (15) comprises a signal filtering unit (41) adapted to receive signals from said input interface (14) and perform a first signal processing adapted to filter out signals belonging to at least one predetermined frequency band; a processor (45) adapted to compute reference values for control loops of said at least one energy converter (11); and
a memory unit (44) adapted to store past reference values computed by said processor (45) and input data provided by a user, said reference values being functions of one or more of the following data: the actual measured signals from said signal filtering unit (41), the past reference values previously stored in said memory unit (44), input data provided by a user, the current time, the geographical position.

10. The system according to claim 9, **characterized in that** said processor (45) further comprises:
a first level processor (42) adapted to compute first indicators of plant operation, said first indicators being functions of one or more of the following data: the actual measured signals from said signal filtering unit (41), the past values of said first indicators previously stored in said memory (44), the input data provided by a user, the current time and geographical position;
a second level processor (43) adapted to compute second indicators of plant operation, said second indicators being functions of one or more of the following entities: said first indicators of plant operation obtained from said first level processor (42), the past values of said second indicators previously stored in said memory (44), the input data provided by the user, the current time and geographical position.

11. The system according to claim 9 or claim 10, **characterized in that** said monitoring and analysis unit (15) further comprises a dynamic model (40) of the plant adapted to receive data from said processor (45) or from said first level processor (42) and from said second level processor (43) and from the user, said dynamic model (40) being adapted to model the behaviour of the plant and to evolve in time in order to improve its capability of modelling the plant.

12. The system according to one or more of the preceding claims, **characterized in that** said monitoring and analysis unit (15) further comprises a tele-communication unit adapted to receive / transmit data from / to a remote location in order to allow tele-management of the plant.

13. Method for the management of a plant by the system of any one of the preceding claims comprising:
providing a system as in any one of the preceding claims comprising at least one electrical machine (10) electrically coupled to at least one energy converter (11) provided with a controller;
providing at least one rotating shaft associated to said at least one electrical machine;
providing at least one sensor (12) configured for sensing a signal representative of a time-varying torque of said shaft;
providing a monitoring and analysis unit (15);
sensing, by the at least one sensor (12), a signal representative of a time-varying torque on the rotating shaft associated to the electrical machine;
receiving, by the monitoring and analysis unit (15), said signal;
analysing, by the monitoring and analysis unit (15), said signal in order to detect the presence of a torsional vibration requiring a control action;
modifying, by the monitoring and analysis unit (15), the reference values of the controller of said at least one energy converter (11), in order to reduce said detected torsional vibration;
the method being **characterized in** further including the steps of:
providing a torsional mode damper (30) controlled by a torsional mode damping controller (31) and configured to store and release energy in order to reduce the detected torsional vibrations;
providing, by the monitoring and analysis unit (15), feedback control to the torsional mode damping controller (31);
discriminating, by the monitoring and analysis unit (15), the detected torsional vibrations between torsional interactions and torsional resonances;
modifying the reference values of the controller of said at least one energy converter (11) without providing feedback control to the torsional mode damping controller (31) when torsional interactions are determined; and
providing feedback control to the torsional mode damping controller (31) as well as modifying the reference values of the controller of said at least one energy converter (11) when the torsional resonances are determined, to reduce the detected vibration.

## Patentansprüche

1. System, einschließlich einer Einrichtung für die Verwaltung einer Anlage und einer Anlage, umfassend:
mindestens eine elektrische Maschine (10), die mit mindestens einem Energiewandler (11) elektrisch gekoppelt ist, der mit einer Steuervorrichtung versehen ist;
mindestens eine rotierende Welle, die mit der mindestens einen elektrischen Maschine verbunden ist;
mindestens einen Sensor (12), der zum Erfassen eines Signals konfiguriert ist, das ein zeitveränderliches Drehmoment der Welle darstellt;
eine Anlagensteuerungseinheit (13), umfassend der Reihe nach:
eine Eingabeschnittstelle (14), die angepasst ist, um Daten von mindestens einem Sensor zu empfangen;
eine Überwachungs- und Analyseeinheit (15), die mit der Eingabeschnittstelle verbunden ist und angepasst ist zum:
Analysieren des Signals, um das Vorhandensein einer Torsionsschwingung innerhalb der Anlage zu erkennen, die eine Steuermaßnahme erfordert, und
Modifizieren der Referenzwerte der Steuervorrichtung des mindestens einen Energiewandlers (11), um die erkannte Schwingung zu verringern;
**dadurch gekennzeichnet, dass**:
die Anlage ferner einen Torsionsmodusdämpfer (TMD) (30) umfasst, der konfiguriert ist, um Energie zu speichern und abzugeben, der mit einer Torsionsmodusdämpfungs-Steuervorrichtung (TMD-Steuervorrichtung) (31) versehen ist; und dass
die Überwachungs- und Analyseeinheit (15) ferner mit der Torsionsmodusdämpfungs-Steuervorrichtung (TMD-Steuervorrichtung) (31) verbunden ist und ferner angepasst ist, um der Torsionsmodusdämpfungs-Steuervorrichtung (TMD-Steuervorrichtung) (31) eine Regelung bereitzustellen, um die erkannte Torsionsschwingung zu verringern;
wobei die Überwachungs- und Analyseeinheit (15) konfiguriert ist zum:
Unterscheiden der erkannten Torsionsschwingungen zwischen Torsionswechselwirkungen und Torsionsresonanzen;
Modifizieren der Referenzwerte der Steuervorrichtung des mindestens einen Energiewandlers (11), ohne der Torsionsmodusdämpfungssteuervorrichtung (31) die Regelung bereitzustellen, wenn Torsionswechselwirkungen bestimmt werden; und
Bereitstellen der Regelung an die Torsionsmodusdämpfungssteuervorrichtung (31) sowie Modifizieren der Referenzwerte der Steuervorrichtung des mindestens einen Energiewandlers (11), wenn die Torsionsresonanzen bestimmt werden, um die erkannte Schwingung zu verringern.

2. System nach Anspruch 1, **dadurch gekennzeichnet, dass** die Überwachungs- und Analyseeinheit (15) ferner angepasst ist, um Torsionsschwingungen innerhalb der Anlage zu erkennen und das Modifizieren der Referenzwerte der Steuervorrichtung des mindestens einen Energiewandlers (11) und das Modifizieren der Referenzwerte der Torsionsmodusdämpfungssteuervorrichtung (31) richtig zu modulieren.

3. System nach einem oder mehreren der Ansprüche 1 bis 2,
**dadurch gekennzeichnet, dass** die Überwachungs- und Analyseeinheit (15) ferner angepasst ist, um seitliche Schwingungen innerhalb der Anlage zu erkennen und das Modifizieren der Referenzwerte der Steuervorrichtung des mindestens einen Energiewandlers (11) und das Modifizieren der Referenzwerte der Torsionsmodusdämpfungssteuervorrichtung (31) richtig zu modulieren.

4. System nach einem oder mehreren der vorstehenden Ansprüche, **dadurch gekennzeichnet, dass** die Anlage eine Öl- und Gasanlage oder eine petrochemische Anlage ist.

5. System nach einem oder mehreren der vorstehenden Ansprüche, **dadurch gekennzeichnet, dass** der Torsionsmodusdämpfer (30) von der aktiven Art ist.

6. System nach einem oder mehreren der vorstehenden Ansprüche, **dadurch gekennzeichnet, dass** der Torsionsmodusdämpfer (TMD) (30) angepasst ist, um Energie zu speichern und abzugeben: in elektromagnetischer Form über eine Vielzahl von einzelnen oder gekoppelten Induktoren oder Kondensatoren; oder in kinetischer und/oder potenzieller und/oder gravitativer Form über eine Vielzahl von einzelnen oder gekoppelten bewegbaren Körpern, möglicherweise einschließlich von Fluiden; oder in potenzieller elastischer Form über eine Multiplizität von einzelnen oder gekoppelten elastischen Körpern oder über eine Vielzahl von Fluiden; oder in Form von Wärme über eine Vielzahl von wärmeakkumulierenden Teilsystemen; oder in chemischer Form über eine Vielzahl von chemischen Reaktionen.

7. System nach einem oder mehreren der vorstehenden Ansprüche, **dadurch gekennzeichnet, dass** das mindestens eine zeitveränderliche Drehmoment der Welle mit mindestens einer innerhalb der Anlage vorhandenen natürlichen Torsionsfrequenz zusammenhängt.

8. System nach einem oder mehreren der vorstehenden Ansprüche, **dadurch gekennzeichnet, dass** die Frequenz der Torsionsschwingungen unter 400 Hz liegt.

9. System nach einem oder mehreren der vorstehenden Ansprüche, **dadurch gekennzeichnet, dass** die Überwachungs- und Analyseeinheit (15) eine Signalfiltereinheit (41) umfasst, die angepasst ist, um Signale von der Eingangsschnittstelle (14) zu empfangen und eine erste Signalverarbeitung durchzuführen, die angepasst ist, um Signale herauszufiltern, die zu mindestens einem vorbestimmten Frequenzband gehören; einen Prozessor (45), der angepasst ist, um Referenzwerte für die Regelkreise des mindestens einen Energiewandlers (11) zu berechnen; und
eine Speichereinheit (44), die angepasst ist, um durch den Prozessor (45) berechnete frühere Referenzwerte und durch einen Benutzer bereitgestellte Eingabedaten zu speichern, wobei die Referenzwerte Funktionen von einem oder mehreren der folgenden Daten sind: den tatsächlich gemessenen Signalen von der Signalfiltereinheit (41), den zuvor in der Speichereinheit (44) gespeicherten früheren Referenzwerten, durch einen Benutzer bereitgestellten Eingabedaten, der aktuellen Zeit, der geographischen Position.

10. System nach Anspruch 9, **dadurch gekennzeichnet, dass** der Prozessor (45) ferner umfasst:
einen Prozessor (42) einer ersten Ebene, der angepasst ist, um erste Indikatoren für einen Betrieb der Anlage zu berechnen, wobei die ersten Indikatoren Funktionen von einem oder mehreren der folgenden Daten sind: den tatsächlich gemessenen Signalen von der Signalfiltereinheit (41), den zuvor in dem Speicher (44) gespeicherten früheren Werten der ersten Indikatoren, den durch einen Benutzer bereitgestellten Eingabedaten, der aktuellen Zeit und der geographischen Position;
einen Prozessor (43) einer zweiten Ebene, der angepasst ist, um zweite Indikatoren für den Betrieb der Anlage zu berechnen, wobei die zweiten Indikatoren Funktionen einer oder mehrerer der folgenden Einheiten sind: den ersten von dem Prozessor der ersten Ebene (42) erhaltenen Indikatoren für den Betrieb der Anlage, den zuvor in dem Speicher (44) gespeicherten früheren Werten der zweiten Indikatoren, den durch den Benutzer bereitgestellten Eingabedaten, der aktuellen Zeit und der geographischen Position.

11. System nach Anspruch 9 oder Anspruch 10,
**dadurch gekennzeichnet, dass** die Überwachungs- und Analyseeinheit (15) ferner ein dynamisches Modell (40) der Anlage umfasst, das angepasst ist, um Daten von dem Prozessor (45) oder von dem Prozessor (42) der ersten Ebene und von dem Prozessor (43) der zweiten Ebene und von dem Benutzer zu empfangen, wobei das dynamische Modell (40) angepasst ist, um das Verhalten der Anlage zu modellieren und sich mit der Zeit weiterzuentwickeln, um seine Fähigkeit zum Modellieren der Anlage zu verbessern.

12. System nach einem oder mehreren der vorstehenden Ansprüche, **dadurch gekennzeichnet, dass** die Überwachungs- und Analyseeinheit (15) ferner eine Telekommunikationseinheit umfasst, die angepasst ist, um Daten von/zu einem entfernten Ort zu empfangen/senden, um eine Fernverwaltung der Anlage zu ermöglichen.

13. Verfahren für die Verwaltung einer Anlage durch das System nach einem der vorstehenden Ansprüche, umfassend:
Bereitstellen eines Systems nach einem der vorstehenden Ansprüche, umfassend mindestens eine elektrische Maschine (10), die mit mindestens einem Energiewandler (11) elektrisch gekoppelt ist, der mit einer Steuervorrichtung versehen ist;
Bereitstellen mindestens einer rotierenden Welle, die mit der mindestens einen elektrischen Maschine verbunden ist;
Bereitstellen mindestens eines Sensors (12), der zum Erfassen eines Signals konfiguriert ist, das ein zeitveränderliches Drehmoment der Welle darstellt;
Bereitstellen einer Überwachungs- und Analyseeinheit (15);
Erfassen, durch den mindestens einen Sensor (12), des Signals, das ein zeitveränderliches Drehmoment darstellt, an der mit der elektrischen Maschine verbundenen rotierenden Welle;
Empfangen, durch die Überwachungs- und Analyseeinheit (15), des Signals;
Analysieren, durch die Überwachungs- und Analyseeinheit (15), des Signals, um das Vorhandensein einer Torsionsschwingung zu erkennen, die eine Steuermaßnahme erfordert;
Modifizieren, durch die Überwachungs- und Analyseeinheit (15), der Referenzwerte der Steuervorrichtung des mindestens einen Energiewandlers (11), um die erkannte Torsionsschwingung zu verringern;
wobei das Verfahren **dadurch gekennzeichnet ist, dass** es ferner die Schritte einschließt:
Bereitstellen eines Torsionsmodusdämpfers (30), der durch eine Torsionsmodusdämpfungssteuervorrichtung (31) gesteuert wird und konfiguriert ist, um Energie zu speichern und abzugeben, um die erfassten Torsionsschwingungen zu verringern;
Bereitstellen, durch die Überwachungs- und Analyseeinheit (15), der Regelung an die Torsionsmodusdämpfungssteuervorrichtung (31);
Unterscheiden, durch die Überwachungs- und Analyseeinheit (15), der erkannten Torsionsschwingungen zwischen Torsionswechselwirkungen und Torsionsresonanzen;
Modifizieren der Referenzwerte der Steuervorrichtung des mindestens einen Energiewandlers (11), ohne der Torsionsmodusdämpfungssteuervorrichtung (31) die Regelung bereitzustellen, wenn Torsionswechselwirkungen bestimmt werden; und
Bereitstellen der Regelung an die Torsionsmodusdämpfungssteuervorrichtung (31) sowie Modifizieren der Referenzwerte der Steuervorrichtung des mindestens einen Energiewandlers (11), wenn die Torsionsresonanzen bestimmt werden, um die erkannten Schwingungen zu verringern.

## Revendications

1. Système comportant un appareil destiné à la gestion d'une usine et usine comprenant :
au moins une machine électrique (10) couplée électriquement à au moins un convertisseur d'énergie (11) muni d'un dispositif de commande ;
au moins un arbre rotatif associé à ladite au moins une machine électrique ;
au moins un capteur (12) configuré pour détecter un signal représentant un couple variable dans le temps dudit arbre ;
une unité de commande de l'usine (13) comprenant à son tour :
une interface d'entrée (14) adaptée à recevoir des données provenant d'au moins un capteur ;
une unité de suivi et d'analyse (15), associée à ladite interface d'entrée et adaptée à :
analyser ledit signal afin de détecter la présence d'une vibration de torsion au sein de ladite usine nécessitant une action de commande, et
modifier les valeurs de référence du dispositif de commande dudit au moins un convertisseur d'énergie (11), afin de réduire ladite vibration détectée ;
**caractérisé en ce que** :
ladite usine comprend en outre un amortisseur de mode de torsion (TMD) (30) configuré pour stocker et libérer l'énergie fournie par un dispositif de commande d'amortissement de mode de torsion (TMD) (31) ; et **en ce que**
ladite unité de suivi et d'analyse (15) est en outre associée au dispositif de commande d'amortissement de mode de torsion (TMD) (31) et est en outre adaptée à fournir une commande de rétroaction au dispositif de commande d'amortissement de mode de torsion (TMD) (31) afin de réduire ladite vibration de torsion détectée ;
dans lequel ladite unité de suivi et d'analyse (15) est configurée pour :
distinguer les vibrations de torsion détectées entre les interactions de torsion et les résonances de torsion ;
modifier les valeurs de référence du dispositif de commande dudit au moins un convertisseur d'énergie (11) sans fournir de commande de rétroaction au dispositif de commande d'amortissement de mode de torsion (31) lorsque des interactions de torsion sont déterminées ; et
fournir une commande de rétroaction au dispositif de commande d'amortissement de mode de torsion (31) et modifier les valeurs de référence du dispositif de commande dudit au moins un convertisseur d'énergie (11) lorsque les résonances de torsion sont déterminées, afin de réduire les vibrations détectées.

2. Système selon la revendication 1, **caractérisé en ce que** ladite unité de suivi et d'analyse (15) est en outre adaptée à détecter les vibrations de torsion au sein de ladite usine et moduler correctement la modification des valeurs de référence du dispositif de commande dudit au moins un convertisseur d'énergie (11) et la modification des valeurs de référence du dispositif de commande d'amortissement de mode de torsion (31).

3. Système selon l'une ou les revendications 1 à 2, **caractérisé en ce que** ladite l'unité de suivi et d'analyse (15) est en outre adaptée à détecter les vibrations latérales au sein de ladite usine et moduler correctement la modification des valeurs de référence du dispositif de commande dudit au moins un convertisseur d'énergie (11) et la modification des valeurs de référence du dispositif de commande d'amortissement de mode de torsion (31).

4. Système selon l'une ou plusieurs des revendications précédentes, **caractérisé en que** ladite usine est une usine pétrolière et gazière ou une usine pétrochimique.

5. Système selon l'une ou plusieurs des revendications précédentes, **caractérisé en ce que** ledit amortisseur de mode de torsion (30) est du type actif.

6. Système selon l'une ou plusieurs des revendications précédentes, **caractérisé en ce que** ledit amortisseur de torsion (TMD) (30) est adapté à stocker et libérer de l'énergie sous forme électromagnétique par l'intermédiaire d'une pluralité d'inducteurs ou de condensateurs simples ou couplés ; ou sous forme cinétique et/ou potentielle et/ou gravitationnelle par l'intermédiaire d'une pluralité de corps mobiles simples ou couplés, y compris éventuellement des fluides ; ou sous forme potentielle élastique par l'intermédiaire d'une multiplicité de corps élastiques simples ou couplés ou par l'intermédiaire d'une pluralité de fluides ; ou sous forme de chaleur par l'intermédiaire d'une pluralité de sous-systèmes d'accumulation de chaleur ; ou sous forme chimique par l'intermédiaire d'une pluralité de réactions chimiques.

7. Système selon l'une ou plusieurs des revendications précédentes, **caractérisé en ce que** ledit au moins un couple variable dans le temps dudit arbre est lié à au moins une fréquence de torsion naturelle présente dans l'usine.

8. Système selon l'une ou plusieurs des revendications précédentes, **caractérisé en ce que** la fréquence de ces vibrations de torsion est inférieure à 400 Hz.

9. Système selon l'une ou plusieurs des revendications précédentes, **caractérisé en ce que** l'unité de suivi et d'analyse (15) comprend une unité de filtrage des signaux (41) adaptée à recevoir les signaux de ladite interface d'entrée (14) et effectuer un premier traitement des signaux adapté à filtrer les signaux appartenant à au moins une bande de fréquence prédéterminée ; un processeur (45) adapté à calculer les valeurs de référence pour les boucles de commande dudit au moins un convertisseur d'énergie (11) ; et
une unité de mémoire (44) adaptée à stocker les valeurs de référence antérieures calculées par ledit processeur (45) et les données d'entrée fournies par un utilisateur, lesdites valeurs de référence étant des fonctions d'une ou plusieurs des données suivantes : les signaux mesurés réels provenant de ladite unité de filtrage des signaux (41), les valeurs de référence antérieures précédemment stockées dans ladite unité de mémoire (44), les données d'entrée fournies par un utilisateur, l'heure actuelle, la position géographique.

10. Système selon la revendication 9, **caractérisé en ce que** ledit processeur (45) comprend en outre :
un processeur de premier niveau (42) adapté à calculer les premiers indicateurs du fonctionnement de l'usine, lesdits premiers indicateurs étant des fonctions d'une ou plusieurs des données suivantes : les signaux mesurés réels provenant de ladite unité de filtrage des signaux (41), les valeurs antérieures desdits premiers indicateurs précédemment stockées dans ladite mémoire (44), les données d'entrée fournies par un utilisateur, l'heure actuelle et la position géographique ;
un processeur de second niveau (43) adapté à calculer les seconds indicateurs de fonctionnement de l'usine, lesdits seconds indicateurs étant des fonctions d'une ou de plusieurs des entités suivantes : les premiers indicateurs de fonctionnement de l'usine obtenus à partir dudit processeur de premier niveau (42), les valeurs antérieures desdits seconds indicateurs précédemment stockées dans ladite mémoire (44), les données d'entrée fournies par l'utilisateur, l'heure actuelle et la position géographique.

11. Système selon la revendication 9 ou la revendication 10,
**caractérisé en ce que** ladite unité de suivi et d'analyse (15) comprend en outre un modèle dynamique (40) de l'usine adapté à recevoir des données dudit processeur (45) ou dudit processeur de premier niveau (42) et dudit processeur de second niveau (43) et de l'utilisateur, ledit modèle dynamique (40) étant adapté à modéliser le comportement de l'usine et pour évoluer dans le temps afin d'améliorer sa capacité à modéliser l'usine.

12. Système selon l'une ou les revendications précédentes,
**caractérisé en ce que** l'unité de suivi et d'analyse (15) comprend en outre une unité de télécommunication adaptée à recevoir/transmettre des données depuis/vers un site distant afin de permettre la télégestion de l'usine.

13. Procédé de gestion d'une usine par le système de l'une quelconque des revendications précédentes comprenant :
la fourniture d'un système selon l'une quelconque des revendications précédentes comprenant au moins une machine électrique (10) couplée électriquement à au moins un convertisseur d'énergie (11) muni d'un dispositif de commande ;
la fourniture d'au moins un arbre rotatif associé à ladite au moins une machine électrique ;
la fourniture d'au moins un capteur (12) configuré pour détecter un signal représentant un couple variable dans le temps dudit arbre ;
la fourniture d'une unité de suivi et d'analyse (15) ;
la détection, par ledit au moins un capteur (12), d'un signal représentant un couple variable dans le temps sur l'arbre rotatif associé à la machine électrique ;
la réception, par l'unité de suivi et d'analyse (15), dudit signal ;
l'analyse, par l'unité de suivi et d'analyse (15), dudit signal afin de détecter la présence d'une vibration de torsion nécessitant une action de commande ;
la modification, par l'unité de suivi et d'analyse (15), des valeurs de référence du dispositif de commande dudit au moins un convertisseur d'énergie (11), afin de réduire ladite vibration de torsion détectée ;
le procédé étant **caractérisé en ce qu'il** comprend en outre les étapes suivantes consistant à :
fournir un amortisseur de mode de torsion (30) commandé par un dispositif de commande d'amortissement de mode de torsion (31) et configuré pour stocker et libérer de l'énergie afin de réduire les vibrations de torsion détectées ;
fournir, par l'unité de suivi et d'analyse (15), une commande de rétroaction au dispositif de commande d'amortissement de mode de torsion (31) ;
distinguer, par l'unité de suivi et d'analyse (15), les vibrations de torsion détectées entre les interactions de torsion et les résonances de torsion ;
modifier les valeurs de référence du dispositif de commande dudit au moins un convertisseur d'énergie (11) sans fournir de commande de rétroaction au dispositif de commande d'amortissement de mode de torsion (31) lorsque des interactions de torsion sont déterminées ; et
fournir une commande de rétroaction au dispositif de commande d'amortissement de mode de torsion (31) ainsi que la modification des valeurs de référence du dispositif de commande dudit au moins un convertisseur d'énergie (11) lorsque les résonances de torsion sont déterminées, afin de réduire les vibrations détectées.
